# EUROPEAN PATENT SPECIFICATION

(11) **EP 3 913 939 B1**
(45) Date of publication and mention of the grant of the patent: **12.07.2023**
(21) Application number: 20175938.8
(22) Date of filing: 21.05.2020
(51) Int. Cl.: G08G 1/0967, B60W 30/18, H04W 4/44, G08G 1/01, G08G 1/16

(54) **COMPENSATING A DATA HANDLING DELAY IN V2I2V COMMUNICATION**
KOMPENSATION EINER DATENHANDHABUNGSVERZÖGERUNG IN DER V2I2V-KOMMUNIKATION
COMPENSATION DE RETARD DE MANIPULATION DE DONNÉES DANS UNE COMMUNICATION V2I2V

(43) Date of publication of application: 24.11.2021
(73) Proprietor: Deutsche Telekom AG, 53113 Bonn (DE)
(72) Inventor: SCHNIEDERS, Dominik, 52078 Aachen (DE)
(74) Representative: RDL Patentanwälte PartG mbB

(56) References cited:
- WO-A1-2017/218003
- HONGIL AN ET AL: "Design of a Cooperative Lane Change Protocol for a Connected and Automated Vehicle Based on an Estimation of the Communication Delay", SENSORS, vol. 18, no. 10, 1 October 2018 (2018-10-01), page 3499, XP055723763, ISSN: 1424-8220, DOI: 10.3390/s18103499

## Description

The invention relates to a method for operating a vehicle, wherein a control unit of a vehicle calculates a trajectory of the vehicle depending on operational data of a further vehicle, the operational data being transmitted from the further vehicle to the vehicle via wireless connections being established to a radio access network by respective communication units of the vehicle and the further vehicle. The invention further relates to a vehicle and a computer program product.

Vehicles are increasingly provided with autonomous driving capabilities which at present are provided by advanced driving assistance systems (ADAS) and only cover particular operational contexts, i.e. traffic situations, of the vehicles (levels 2 and 3). However, fully autonomous vehicles (level 4) are expected to be available in the future which are operated basically without any intervention of a driver. WO 2017/218003 A1 discloses a method for optimizing an inter-vehicle distance for autonomous vehicles. The method allows the autonomous vehicles for safely following each other with shorter distances in between.

An autonomous driving functionality of a vehicle is based on a digital environmental model of the vehicle which is generated and continuously updated during operation of the vehicle by a control unit of the vehicle. The digital environmental model reflects a traffic situation the vehicle is actually involved in. When the traffic situation comprises one or more further vehicles operating in the environment of the vehicle the digital environmental model necessarily has to comprise operational data, e.g. positions, velocities, accelerations, etc. of each further vehicle being involved in the traffic situation of the vehicle. The article "Design of a Cooperative Lane Change Protocol for a Connected and Automated Vehicle Based on an Estimation of the Communication delay" by Hongil et al., published in the Sensors, 2018, 18, 3499 on October 17, 2018, doi:10.3390/s18103499, describes vehicles exchanging operational data.

A trajectory of the vehicle, i.e. positions and velocities of the vehicle as respective functions of time, is calculated by the control unit depending on operational data of the vehicle and the operational data of each further vehicle being involved in the traffic situation of the vehicle in order to provide for a comfortable and safe operation of the vehicle following the calculated trajectory.

The operational data of a further vehicle may be transmitted from the further vehicle to the vehicle via wireless connections being established to a radio access network (RAN) by respective communication units of the vehicle and the further vehicle. However, the operational data of the further vehicle is received by the vehicle with a time offset, i.e. after a run time of a signal between the further vehicle and the vehicle.

Due to the time offset the digital environmental model of the vehicle is always outdated with respect to the further vehicle, i.e. the digital environmental model reflects a traffic situation with the further vehicle the time offset ago. In other words, there is a discrepancy between the actual traffic situation and the traffic situation reflected by the digital environmental model.

In a complex traffic situation the discrepancy may have to be removed by quickly adjusting the calculated trajectory, the quick trajectory adjustment causing the vehicle to suddenly accelerate and reducing an operational comfort of the vehicle. Eventually, even a collision with the further vehicle may occur despite the quick trajectory adjustment which reduces an operational safety of the vehicle.

Hence, it would be desirable to increase the operational comfort and the operational safety of the vehicle being involved in a traffic situation with one or more further vehicles.

It is, therefore, an object of the invention to suggest a method according to claim 1 for comfortably and safely operating a vehicle in a traffic situation comprising at least one further vehicle. Further objects of the invention are a system according to claim 13 and a computer program product according to claim 14. Advantageous embodiments can be found in the dependent claims.

A first aspect of the invention is a method for operating a vehicle, wherein a control unit of a vehicle calculates a trajectory of the vehicle depending on operational data of a further vehicle, the operational data being transmitted from the further vehicle to the vehicle via wireless connections being established to a radio access network by respective communication units of the vehicle and the further vehicle. The vehicle and the further vehicle communicate via a vehicle-to-infrastructure-to-vehicle (V2I2V) connection with the radio access network being the infrastructure. A cellular network or a W-LAN network as the radio access network may provide the vehicle and the further vehicle with the respective wireless connections.

According to the invention calculating the trajectory comprises taking into account a data handling delay of the received operational data. Taking into account the data handling delay removes or at least reduces a discrepancy between the actual operational data and the received operational data of the further vehicle. The data handling delay allows for updating the received operational data being outdated due to the data handling delay to the actual time. As a consequence, a sudden acceleration for quickly adjusting the calculated trajectory is avoided or at least mitigated and a risk for colliding with the further vehicle is removed or at least reduced. Both effects result in a comfortable and safe operation of the vehicle.

Still according to the invention, an edge data center being connected to the radio access network calculates the data handling delay and transmits the calculated data handling delay to the vehicle. The edge data center may be a server node which is immediately connected to an access node, e.g. a base station, of the radio access network, the access node providing the wireless connections to the wireless communication units of the vehicle and the further vehicle. The edge data center may also be a server node of the radio access network.

Calculating the data handling delay preferably comprises summing a maximum downlink latency being allocated to a wireless connection of the vehicle by the radio access network and a maximum uplink latency being allocated to a wireless connection of the further vehicle by the radio access network. The maximum downlink latency and the maximum uplink latency indicate a maximum run time of the operational data along the wireless connections. The uplink run time and the downlink run time essentially contribute to the over all run time of the operational data between the vehicle and the further vehicle. When the edge data server knows the maximum download latency and the maximum uplink latency the edge data server may calculate the data handling delay precisely.

Advantageously, the radio access network allocates a predetermined combination of a minimum data rate and/or a maximum latency for uplink and downlink, respectively, to each wireless connection of the vehicle or the further vehicle. The radio access network may transmit the allocated predetermined combinations, i.e. the allocated minimum data rate and/or the maximum latency for uplink and downlink, respectively, to the edge data center for having the data handling delay calculated by the edge data center. A specification of a radio communication protocol may define a plurality of predetermined combinations of minimum data rate values and maximum latency values. The combinations may cover a range from a practical non-availability to an ideal availability of a data rate and/or latency and may prefer either the data rate or the latency between the non-availability and the ideal availability.

Calculating the data handling delay may further comprise summing a processing time for processing the operational data with the processing time being employed by at least one of the edge data center being connected to the radio access network, the vehicle and the further vehicle and/or a round trip time (RTT) of the operational data between a backbone, i.e. core, of the radio access network and the edge data center. The respective processing times of the vehicle and the further vehicles are known to the respective vehicle and may be transmitted to the edge data center. The edge data center knows its own processing time for processing the operational data of the further vehicle. The edge data center may also know the round trip time of between the backbone and the edge data center as the radio access network knows the round trip time and may transmit the round trip time to the edge data center. The processing times of the vehicle, the further vehicle and the edge data center and the round trip time of the radio access network complete the contributions to the data handling delay.

In another embodiment, taking into account the data handling delay comprises extrapolating the received operational data into a future determined by the received data handling delay. The operational data of the further vehicle may comprise a position, a velocity and an acceleration, i.e. a speeding up or a braking of the further vehicle, the velocity and the acceleration generally having both a longitudinally directed component and a transversely directed component. Extrapolating the operational data comprises calculating a future version thereof by using an equation of motion. When the operational data of the further vehicle comprises a trajectory of the further vehicle, the trajectory may be additionally or alternatively used for extrapolation.

Additionally or alternatively, taking into account the data handling delay comprises determining a difference between the received operational data and the extrapolated received operational data and employing the determined difference as a safety margin. An extrapolation in time cannot precisely predict the future. Rather does extrapolating include an uncertainty which increases as time increases. The uncertainty is dealt with by using the difference between the received operational data and the extrapolated data for increasing a safety of the calculated trajectory. In other words, the larger the difference is determined the more conservative the trajectory is calculated.

It is preferred that taking into account the data handling delay comprises determining a difference between the extrapolated received operational data and sensorially detected operational data of the further vehicle and using the determined difference for adjusting the extrapolated received operational data. Operational data of the further vehicle may also be detected by one or more sensors of the vehicle. The detected operational data may be used to verify the extrapolated received operational data and to adjust them in case the determined difference exceeds a predetermined threshold value. Comparing the extrapolated received operational data with the sensorially detected operational data further increases a safety of the calculated trajectory.

Calculating the trajectory may also comprise taking into account technical specification data of the further vehicle, the technical specification data being transmitted from the further vehicle to the vehicle via the radio access network. The technical specification data may comprise a maximum velocity and a maximum acceleration of the further vehicle. The technical specification data may comprise any data which is not immediately operational, i.e. related to the actual operation of the further vehicle. For instance, the technical specification data may comprise a maximum velocity and a maximum acceleration of the further vehicle. The technical specification data of the further vehicle allow the control unit of the vehicle for estimating a confidence of the extrapolated received operational data, e.g. for judging whether the further vehicle operates in a comfort zone or near an operational limit.

In an advantageous embodiment calculating the trajectory comprises taking into account an imaginary operation of the further vehicle being consistent with the received technical specification data. Taking into account the technical specification data allows the control unit of the vehicle for consistently calculating possible alternative scenarios of the traffic situation which are worse than the actual traffic situation is or even are worst-case scenarios. The possible alternative scenarios allow for calculating an even more conservative trajectory of the vehicle. Thus, an operational comfort and an operational safety of the vehicle is further increased.

Taking into account an imaginary operation of the further vehicle may particularly comprise taking into account a trajectory of the further vehicle being most hazardous to the vehicle. The control unit of the vehicle may search for hazardous trajectories of the further vehicle in order to calculate an even more conservative trajectory of the vehicle.

In many embodiments, the control unit of the vehicle calculates the trajectory depending on operational data of a plurality of further vehicles. Most traffic situations not only involve the vehicle and one further vehicle but more than one further vehicle. The more further vehicles are involved in the traffic situation the more complex the traffic situation is. The more complex the traffic situation is the more important is calculating a conservative trajectory for achieving a both comfortable and safe operation of the vehicle. It is noted that, of course, the roles of the vehicle and the further vehicle may be readily interchanged. Indeed, the method is a reciprocal method enabling all vehicles being involved in a traffic situation for calculating conservative trajectories being consistent with each other. Moreover, the method may also be applied to a vehicle being operated manually as far as a control unit of the vehicle calculates a trajectory and suggests the calculated trajectory to a driver of the vehicle and/or the vehicle transmits operational data.

Advantageously, the trajectory is calculated ensuring the vehicle to maintain a comfortable safety distance from the further vehicle driving ahead on a lane of a road, ensuring the vehicle to comfortably and safely overtake, with the further vehicle approaching the vehicle on an adjacent lane in an opposite direction, or ensuring the vehicle to comfortably and safely change to an adjacent lane, with the further vehicle approaching the vehicle on the adjacent lane from behind. Changing to an adjacent lane with the further vehicle driving therein or following the further vehicle driving ahead on the lane of the vehicle is prone to an accident of the vehicle. The control unit of the vehicle, hence, is required to calculate a trajectory for these operations of the vehicle in many traffic situations.

A second aspect of the invention is a system according to claim 13, comprising a wireless communication unit and a control unit being connected to the wireless communication unit. The control unit is configured for establishing and continuously updating a digital environmental model of the vehicle and calculating a trajectory for the vehicle depending on the digital environmental model. The control unit may receive operational data of a further vehicle via the wireless communication unit. The system further comprises an edge data center being connected to the radio access network and being configured for carrying out a method according to claims 1 to 12.

According to the invention the control unit is configured for carrying out an inventive method. The control unit is configured for taking into account a data handling delay being caused by the V2I2V connection with the further vehicle. A third aspect of the invention is a computer program product, comprising a computer readable storage medium storing a program code, the program code being executable by a control unit of a vehicle and/or an edge data center being connected to a radio access network. The computer program product may be a CD, a DVD, a USB stick and the like. The program code stored on the computer program product may be executable by the control unit of the vehicle and/or the edge data center immediately or after having been installed therein, respectively.

According to the invention, the program code causes the control unit or the edge data center to carry out an inventive method when being executed by a processor of the control unit or the edge data center, respectively. The vehicle and the edge data center cooperate for allowing a comfortable and safe operation for the vehicle.

It is an essential advantage of the inventive method that the vehicle is operated comfortably and safely. Sudden accelerations of the vehicle are avoided or at least mitigated. A risk for colliding with the further vehicle is removed or at least reduced.

Further advantages and configurations of the invention become apparent from the following description and the enclosed drawings.

It shall be understood that the features described previously and to be described subsequently may be used not only in the indicated combinations but also in different combinations or on their own without leaving the scope of the claims.

The invention is described in detail by means of an exemplary embodiment and with reference to the drawings.
- Fig. 1: schematically shows a structural diagram of a radio access network according to an embodiment of the invention;
- Fig. 2: schematically shows a traffic situation involving a vehicle according to the invention;
- Fig. 3: schematically shows a data handling delay of the operational data shown in fig. 2.

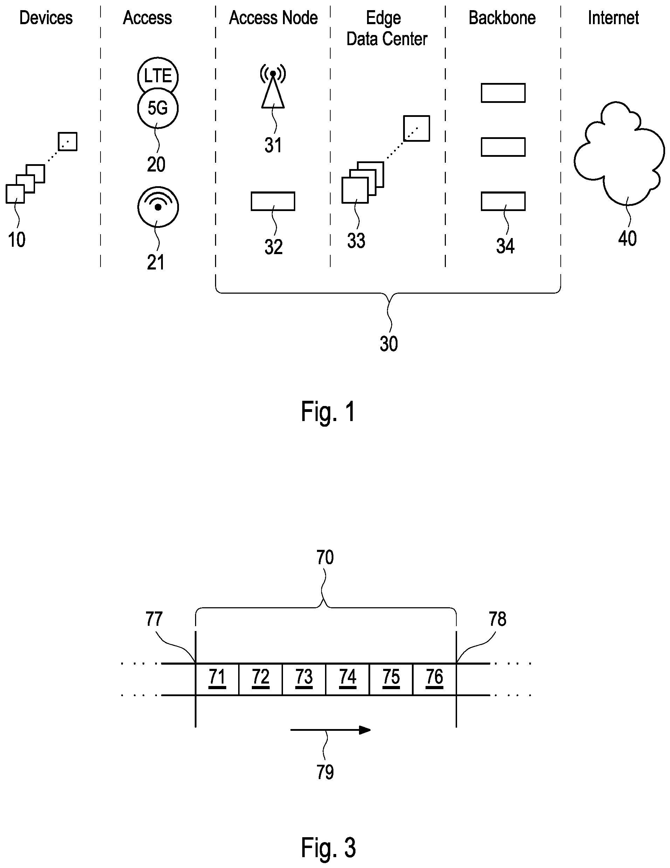

Fig. 1 schematically shows a structural diagram of a radio access network 30 according to an embodiment of the invention. The radio access network 30 comprises a plurality of access nodes 31, 32 with the access node 31 being configured as a base station of a cellular communication network and the access node 32 being configured as a W-LAN router. Each access node 31, 32 supports corresponding wireless connections 20, 21, the wireless connection 20 being configured according to a standardized radio technology, i.e. LTE, 5G, a previous or a future radio technology standard and the wireless connection 21 being configured according to the standard IEEE 802.11 family.

Furthermore, the radio access network 30 comprises a plurality of edge data centers 33 and a backbone, i.e. core, having a plurality of stationary backbone nodes 34. The stationary backbone nodes 34 are not qualified in detail for avoiding any confusion as they are not essential for the invention. The radio access network 30 provides wireless connections to a plurality of user equipment devices 10, the wireless connections allowing the user equipment (UE) devices 10 to access an internet 40 which is symbolized as a cloud.

The radio access network 30 and the user equipment device 10 comprise a program code of a computer program product according to the invention. The program code is executed by a processor of the user equipment device 10 and/or by a processor of a stationary network node of the radio access network 30.

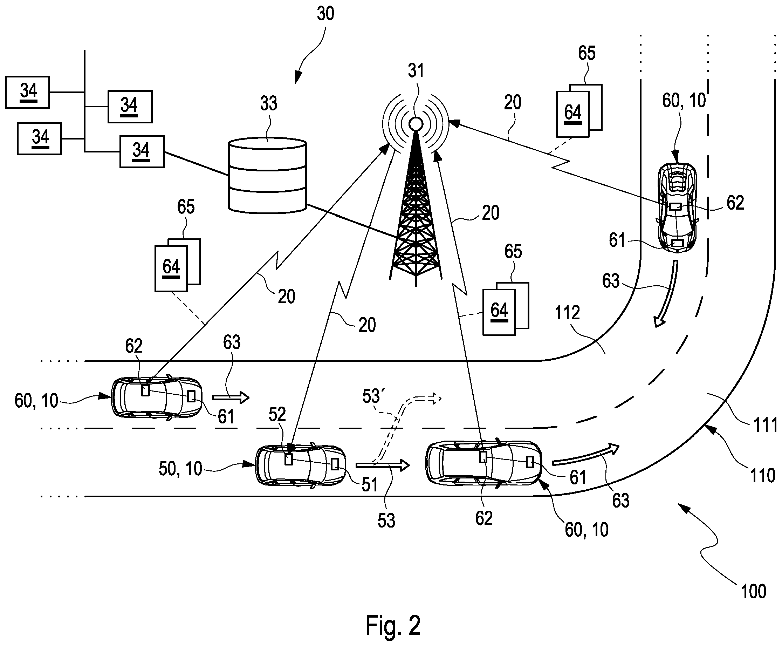

Fig. 2 schematically shows a traffic situation 100 involving a vehicle 50 according to the invention, the vehicle 50 comprising a wireless communication unit 52 and a control unit 51 being connected to the wireless communication unit 52. The traffic situation 100 further involves three further vehicles 60 each further vehicle 60 comprising a wireless communication unit 62 and a control unit 61 being connected to the wireless communication unit 62, respectively. All vehicles 50, 60 are user equipment devices 10 with respect to a radio access network (RAN) 30.

The traffic situation 100 comprises a road 110 with a lane 111 being used by the vehicle 50 and one further vehicle 60 and an adjacent lane 112 being used by two further vehicles 60 one of them approaching the vehicle 50 from behind and the other one approaching the vehicle 50 in an opposite direction. It is noted that the road 110 exemplarily makes a curve wherein the further vehicle 60 approaching the vehicle 50 in the opposite direction is hidden, i.e. can neither be seen by a driver of the vehicle 50 nor detected by a sensor of the vehicle 50. Furthermore the traffic situation 100 comprises an access point 31, an edge data server 33 and a backbone having a plurality of backbone nodes 34. The edge data server 33 is connected both to the access point 31 and the backbone.

The vehicles 50, 60 and the edge data center 33 may have been configured by a computer program product. The computer program product comprises a computer readable storage medium storing a program code. The program code is executable by the control units 51, 61 of the vehicles 50, 60 or the edge data center 33 being connected to the radio access network 30, respectively, and causes the control units 51, 61 or the data edge server 33 to carry out the method described below when being executed by a processor of the control units 51, 61 or the edge data center 33, respectively.

The vehicle 50 is operated as follows. The control unit 51 of the vehicle 50 calculates a trajectory 53, 53' of the vehicle 50 depending on operational data 64 of the plurality of further vehicles 60. The operational data 64 may comprise trajectories 63 of the further vehicles and is transmitted from the further vehicles 60 to the vehicle 50 via wireless connections 20 being established to the radio access network 30 by the respective wireless communication units 52, 62 of the vehicle 50 and the further vehicles 60.

Calculating the trajectory 53, 53' comprises taking into account data handling delays 70 (see fig. 3) of the received operational data 64. The data handling delays 70 are calculated by the edge data center 33 being connected to the radio access network 30 and transmitted to the vehicle 50.

Calculating the data handling delays 70 comprises summing maximum uplink latencies 72 being allocated to the wireless connections 20 of the further vehicles 60 by the radio access network 30 and a maximum downlink latency 75 being allocated to the wireless connection 20 of the vehicle 50 by the radio access network 30. The radio access network 30 may allocate a predetermined combination of a minimum data rate and/or a maximum latency for uplink and downlink, respectively, to each wireless connection 20 of the vehicle 50 or the further vehicles 60.

Calculating the data handling delay 70 further comprises summing a processing time 71, 74, 76 for processing the operational data 64 with the processing time 71, 74, 76 being employed by the edge data center 33 being connected to the radio access network 30, the vehicle 50 and the further vehicles 60 and a round trip time 73 of the operational data 64 between the backbone, i.e. core, of the radio access network 30 and the edge data center 33.

Taking into account the data handling delays 70 may comprise extrapolating the received operational data 64 into a future determined by the received data handling delay 70.

Taking into account the data handling delay 70 may also comprises determining a difference between the received operational data 64 and the extrapolated received operational data 64 and employing the determined difference as a safety margin for calculating the trajectory 53, 53'.

Furthermore, taking into account the data handling delay 70 may comprise determining a difference between the extrapolated received operational data 64 and sensorially detected operational data 64 of the further vehicles 60 and using the determined difference for adjusting the extrapolated received operational data 64.

Moreover, calculating the trajectory 53, 53' may comprise taking into account technical specification data 65 of the further vehicles 60, the technical specification data 65 being transmitted from the further vehicles 60 to the vehicle 50 via the radio access network 30.

Preferably, calculating the trajectory 53, 53' comprises taking into account an imaginary operation of the further vehicles 60 being consistent with the received technical specification data, particularly an imaginary operation of the further vehicle 60 comprises taking into account a trajectory 53 of the further vehicles 60 being most hazardous to the vehicle 50.

The trajectory 53 may be calculated ensuring the vehicle 50 to maintain a comfortable safety distance from the further vehicle 60 driving ahead on the lane 111 of the road 110.

The trajectory 53' may be calculated ensuring the vehicle 50 to comfortably and safely change lane and overtake the vehicle 60 driving ahead on the lane 111, with the further vehicle 60 approaching the vehicle 50 on the adjacent lane 112 of the road 110 in an opposite direction.

The trajectory 53' may also be calculated ensuring the vehicle 50 to comfortably and safely change to the adjacent lane 112, with the further vehicle 60 approaching the vehicle 50 on the adjacent lane 112 from behind. This operation of the vehicle 50 often occurs on a road 110 having two or more equally directed lanes 111, 112.

The method allows the control unit 51 of the vehicle 50 to calculate the trajectory 53, 53' for a comfortable and safe operation of the vehicle 50.

Fig. 3 schematically shows a data handling delay 70 of the operational data 64 shown in fig. 2. The data handling delay 70 is a sum of the processing time 71 of the further vehicle 60, a maximum uplink latency 72 allocated to the wireless connection of the wireless communication unit 62 of the further vehicle 60 to the access node 31, a round-trip time (RTT) 73 of the operational data 64 between the backbone, i.e. core, of the radio access network 30 and the edge data center 33, the processing time 74 of the edge data center 33, the maximum downlink latency 75 allocated to the wireless connection of the wireless communication unit 52 of the vehicle 50 to the access node 31 and the processing time 76 of the vehicle 50.

The data handling delay 70 causes the operational data 64 of the further vehicles 60 being received by the vehicle 50 at a present time 78 to reflect respective operations of the further vehicles 60 at a time the data handling delay 70 ago, i.e. a past operation of the further vehicles 60. A time direction 79 is indicated from left to right in the figure.

Of cause, the data handling delay 70 may be different for each further vehicle 60 as processing times 71 and maximum uplink latencies 72 may be different for each further vehicle 60.

### Reference numerals

- 10: user equipment device

- 20: wireless connection
- 21: wireless connection

- 30: radio access network
- 31: access node
- 32: access node
- 33: edge data center
- 34: backbone node

- 40: internet

- 50: vehicle
- 51: control unit
- 52: wireless communication unit
- 53: trajectory
- 53': trajectory

- 60: further vehicle
- 61: control unit
- 62: wireless communication unit
- 63: trajectory
- 64: operational data
- 65: technical specification data

- 70: data handling delay
- 71: processing time of the further vehicle
- 72: maximum uplink latency
- 73: round trip time
- 74: processing time of the edge data center
- 75: maximum downlink latency
- 76: processing time of the vehicle
- 77: time the data handling delay ago
- 78: present time
- 79: time direction

- 100: traffic situation
- 110: road
- 111: lane
- 112: adjacent lane

## Claims

1. A method for operating a vehicle (50), wherein
- a control unit (51) of a vehicle (50) calculates a trajectory (53, 53') of the vehicle (50) depending on operational data (64) of a further vehicle (60), the operational data (64) being transmitted from the further vehicle (60) to the vehicle (50) via wireless connections (20, 21) being established to a radio access network (30) by respective wireless communication units (52, 62) of the vehicle (50) and the further vehicle (60); and
- calculating the trajectory (53, 53') comprises taking into account a data handling delay (70) of the received operational data (64),
wherein an edge data center (33) being connected to the radio access network (30) calculates the data handling delay (70) and transmits the calculated data handling delay (70) to the vehicle (50).

2. The method according to claim 1, wherein calculating the data handling delay (70) comprises summing a maximum uplink latency (72) being allocated to a wireless connection (20, 21) of the further vehicle (60) by the radio access network (30) and a maximum downlink latency (75) being allocated to a wireless connection (20, 21) of the vehicle (50) by the radio access network (30).

3. The method according to claim 2, wherein the radio access network (30) allocates a predetermined combination of a minimum data rate and/or a maximum latency for uplink and downlink, respectively, to each wireless connection (20, 21) of the vehicle (50) or the further vehicle (60).

4. The method according to one of claims 1 to 3, wherein calculating the data handling delay (70) comprises summing a processing time (71, 74, 76) for processing the operational data (64) with the processing time (71, 74, 76) being employed by at least one of the edge data center (33) being connected to the radio access network (30), the vehicle (50) and the further vehicle (60) and/or a round trip time (73) of the operational data (64) between a core of the radio access network (30) and the edge data center (33).

5. The method according to one of claims 1 to 4, wherein taking into account the data handling delay (70) comprises extrapolating the received operational data (64) into a future determined by the received data handling delay (70).

6. The method according to claim 5, wherein taking into account the data handling delay (70) comprises determining a difference between the received operational data (64) and the extrapolated received operational data (64) and employing the determined difference as a safety margin.

7. The method according to claim 5 or 6, wherein taking into account the data handling delay (70) comprises determining a difference between the extrapolated received operational data (64) and sensorially detected operational data (64) of the further vehicle (60) and using the determined difference for adjusting the extrapolated received operational data (64).

8. The method according to one of claims 1 to 7, wherein calculating the trajectory (53, 53') comprises taking into account technical specification data (65) of the further vehicle (60), the technical specification data (65) being transmitted from the further vehicle (60) to the vehicle (50) via the radio access network (30).

9. The method according to claim 8, wherein calculating the trajectory (53, 53') comprises taking into account an imaginary operation of the further vehicle (60) being consistent with the received technical specification data.

10. The method according to claim 9, wherein taking into account an imaginary operation of the further vehicle (60) comprises taking into account a trajectory (53, 53') of the further vehicle (60) being most hazardous to the vehicle (50).

11. The method according to one of claims 1 to 10, wherein the control unit (51) of the vehicle (50) calculates the trajectory (53, 53') depending on operational data (64) of a plurality of further vehicles (60).

12. The method according to one claims 1 to 11, wherein the trajectory (53, 53') is calculated ensuring the vehicle (50) to maintain a comfortable safety distance from the further vehicle (60) driving ahead on a lane (111) of a road (110), ensuring the vehicle (50) to comfortably and safely overtake, with the further vehicle (60), approaching the vehicle (50) on an adjacent lane (112) in an opposite direction, or ensuring the vehicle (50) to comfortably and safely change to an adjacent lane (112), with the further vehicle (60) approaching the vehicle (50) on the adjacent lane (112) from behind.

13. A system comprising a vehicle (50), the vehicle (50) comprising a wireless communication unit (52) for establishing a wireless connection (20, 21) to a radio access network (30) and a control unit (51) being connected to the wireless communication unit (52), and an edge data center (33), the edge data center (33) being connected to the radio access network (30), wherein the system is configured for carrying out a method according to one of claims 1 to 12.

14. A computer program product, comprising a computer readable storage medium storing a program code, the program code being executable by a control unit (51) of a vehicle (50) and an edge data center (33) being connected to a radio access network (30) and causing the control unit (51) and the data edge center (33) to carry out a method according to one of claims 1 to 12 when being executed by a processor of the control unit and the edge data center (33), respectively.

## Patentansprüche

1. Verfahren zum Betreiben eines Fahrzeugs (50), wobei
- eine Steuereinheit (51) eines Fahrzeugs (50) eine Bahn (53, 53') des Fahrzeugs (50) abhängig von Betriebsdaten (64) eines weiteren Fahrzeugs (60) berechnet, wobei die Betriebsdaten (64) von dem weiteren Fahrzeug (60) per Drahtlosverbindungen (20, 21), die über ein Funkzugangsnetz (30) durch jeweilige drahtlose Kommunikationseinheiten (52, 62) des Fahrzeugs (50) und des weiteren Fahrzeugs (60) hergestellt werden, an das Fahrzeug (50) gesendet werden; und
- die Berechnung der Bahn (53, 53') die Berücksichtigung einer Datenhandhabungsverzögerung (70) der empfangenen Betriebsdaten (64) umfasst, wobei ein Edge-Rechenzentrum (33), das mit dem Funkzugangsnetz (30) verbunden ist, die Datenhandhabungsverzögerung (70) berechnet und die berechnete Datenhandhabungsverzögerung (70) an das Fahrzeug (50) sendet.

2. Verfahren nach Patentanspruch 1, wobei die Berechnung der Datenhandhabungsverzögerung (70) das Summieren einer maximalen Uplink-Latenz (72) umfasst, die einer drahtlosen Verbindung (20, 21) des weiteren Fahrzeugs (60) durch das Funkzugangsnetz (30) zugeordnet wird, und einer maximalen Downlink-Latenz (75), die einer drahtlosen Verbindung (20, 21) des Fahrzeugs (50) durch das Funkzugangsnetz (30) zugeordnet wird.

3. Verfahren nach Patentanspruch 2, wobei das Funkzugangsnetz (30) jeder drahtlosen Verbindung (20, 21) des Fahrzeugs (50) oder des weiteren Fahrzeugs (60) eine jeweils vorbestimmte Kombination einer Mindestdatenrate und/oder einer maximalen Latenz für den Uplink bzw. Downlink zuordnet.

4. Verfahren nach einem der Patentansprüche 1 bis 3, wobei die Berechnung der Datenhandhabungsverzögerung (70) das Summieren einer Verarbeitungszeit (71, 74, 76) für die Verarbeitung der Betriebsdaten (64) mit der Verarbeitungszeit (71, 74, 76), die von mindestens einem aus dem Edge-Rechenzentrum (33), das mit dem Funkzugangsnetz (30) verbunden ist, dem Fahrzeug (50) und dem weiteren Fahrzeug (60) verwendet wird, und/oder einer Round-Trip-Zeit (73) der Betriebsdaten (64) zwischen einem Kern des Funkzugangsnetzes (30) und dem Edge-Rechenzentrum (33) umfasst.

5. Verfahren nach einem der Patentansprüche 1 bis 4, wobei die Berücksichtigung der Datenhandhabungsverzögerung (70) das Extrapolieren der empfangenen Betriebsdaten (64) in eine Zukunft umfasst, die von der Datenhandhabungsverzögerung (70) bestimmt wird.

6. Verfahren nach Patentanspruch 5, wobei die Berücksichtigung der Datenhandhabungsverzögerung (70) die Bestimmung einer Differenz zwischen den empfangenen Betriebsdaten (64) und den extrapolierten empfangenen Betriebsdaten (64) und die Verwendung der bestimmten Differenz als Sicherheitsmarge umfasst.

7. Verfahren nach Patentanspruch 5 oder 6, wobei die Berücksichtigung der Datenhandhabungsverzögerung (70) die Bestimmung einer Differenz zwischen den extrapolierten empfangenen Betriebsdaten (64) und sensorisch erkannten Betriebsdaten (64) des weiteren Fahrzeugs (60) und die Verwendung der bestimmten Differenz zum Anpassen der extrapolierten empfangenen Betriebsdaten (64) umfasst.

8. Verfahren nach einem der Patentansprüche 1 bis 7, wobei die Berechnung der Bahn (53, 53') die Berücksichtigung technischer Spezifikationsdaten (65) des weiteren Fahrzeugs (60) umfasst, wobei die technischen Spezifikationsdaten (65) von dem weiteren Fahrzeug (60) über das Funkzugangsnetz (30) an das Fahrzeug (50) gesendet werden.

9. Verfahren nach Patentanspruch 8, wobei die Berechnung der Bahn (53, 53') die Berücksichtigung eines imaginären Betriebs des weiteren Fahrzeugs (60) umfasst, der mit den empfangenen technischen Spezifikationsdaten konsistent ist.

10. Verfahren nach Patentanspruch 9, wobei die Berücksichtigung eines imaginären Betriebs des weiteren Fahrzeugs (60) die Berücksichtigung einer Bahn (53, 53') des weiteren Fahrzeugs (60) umfasst, die für das Fahrzeug (50) am gefährlichsten ist.

11. Verfahren nach einem der Patentansprüche 1 bis 10, wobei die Steuereinheit (51) des Fahrzeugs (50) die Bahn (53, 53') abhängig von den Betriebsdaten (64) einer Vielzahl weiterer Fahrzeuge (60) berechnet.

12. Verfahren nach einem der Patentansprüche 1 bis 11, wobei die Bahn (53, 53') berechnet wird, um sicherzustellen, dass das Fahrzeug (50) einen angemessenen Sicherheitsabstand von dem weiteren Fahrzeug (60) einhält, das auf einer Spur (111) einer Straße (110) vorausfährt, um sicherzustellen, dass das Fahrzeug (50) bequem und sicher überholen kann, wenn sich das weitere Fahrzeug (60) dem Fahrzeug (50) auf einer angrenzenden Spur (112) in einer entgegengesetzten Richtung nähert, oder um sicherzustellen, dass das Fahrzeug (50) bequem und sicher in eine angrenzende Spur (112) wechseln kann, wenn sich das weitere Fahrzeug (60) dem Fahrzeug (50) in der angrenzenden Spur (112) von hinten nähert.

13. System, das ein Fahrzeug (50) umfasst, wobei das Fahrzeug (50) eine drahtlose Kommunikationseinheit (52) zum Herstellen einer drahtlosen Verbindung (20, 21) zu einem Funkzugangsnetz (30) und eine Steuereinheit (51), die mit der drahtlosen Kommunikationseinheit (52) verbunden ist, und ein Edge-Rechenzentrum (33) umfasst, wobei das Edge-Rechenzentrum (33) mit dem Funkzugangsnetz (30) verbunden ist, wobei das System zum Ausführen eines Verfahrens nach den Patentansprüchen 1 bis 12 konfiguriert ist.

14. Computerprogrammprodukt, das ein computerlesbares Speichermedium umfasst, das einen Programmcode speichert, wobei der Programmcode durch eine Steuereinheit (51) eines Fahrzeugs (50) und ein Edge-Rechenzentrum (33), die mit einem Funkzugangsnetz (30) verbunden sind, ausführbar ist und die Steuereinheit (51) und/oder den Edge-Rechenzentrumsserver (33) dazu veranlasst, ein Verfahren nach einem der Patentansprüche 1 bis 12 durchzuführen, wenn es von einem Prozessor der Steuereinheit bzw. dem Edge-Rechenzentrum (33) ausgeführt wird.

## Revendications

1. Procédé pour faire fonctionner un véhicule (50),
- une unité de commande (51) d'un véhicule (50) calculant une trajectoire (53, 53') du véhicule (50) en fonction de données opérationnelles (64) d'un autre véhicule (60), les données opérationnelles (64) étant transmises de l'autre véhicule (60) au véhicule (50) au moyen de connexions sans fil (20, 21) établies via un réseau d'accès radio (30) par des unités de communication sans fil respectives (52, 62) du véhicule (50) et de l'autre véhicule (60); et
- le calcul de la trajectoire (53, 53') comprenant la prise en compte d'un délai de traitement de données (70) des données opérationnelles reçues (64), un centre de données en périphérie étant connecté au réseau d'accès radio (30) calculant le délai de traitement de données (70) et transmettant ce dernier au véhicule (50).

2. Procédé selon la revendication 1, le calcul du délai de traitement de données (70) comprenant le calcul de la somme d'une latence de liaison montante maximale (72) étant assignée par le réseau d'accès radio (30) à une connexion sans fil (20, 21) de l'autre véhicule (60) et d'une latence de liaison descendante maximale (75) étant assignée par le réseau d'accès radio (30) à une connexion sans fil (20, 21) du véhicule (50).

3. Procédé selon la revendication 2, le réseau d'accès radio (30) assignant une combinaison prédéterminée d'un débit de données minimal et/ou une latence maximale pour les liaisons montante et descendante respectivement à chaque connexion sans fil (20, 21) du véhicule (50) ou de l'autre véhicule (60).

4. Procédé selon l'une quelconque des revendications 1 à 3, le calcul du délai de traitement de données (70) comprenant le calcul de la somme d'un temps de traitement (71, 74, 76) pour traiter les données opérationnelles (64), le temps de traitement (71, 74, 76) étant utilisé par au moins un du centre de données en périphérie (33) étant connecté au réseau d'accès radio (30), le véhicule (50) et l'autre véhicule (60) et/ou un temps aller-retour (73) des données opérationnelles (64) entre un coeur du réseau d'accès radio (30) et le centre de données en périphérie (33).

5. Procédé selon l'une quelconque des revendications 1 à 4, la prise en compte du délai de traitement de données (70) comprenant l'extrapolation des données opérationnelles reçues (64) dans un avenir déterminé par le délai de traitement de données reçu (70).

6. Procédé selon la revendications 5, la prise en compte du délai de traitement de données (70) comprenant la détermination d'une différence entre les données opérationnelles reçues (64) et les données opérationnelles reçues extrapolées (64) et l'utilisation de la différence déterminée en tant que marge de sécurité.

7. Procédé selon la revendication 5 ou 6, la prise en compte du délai de traitement (70) comprenant la détermination d'une différence entre les données opérationnelles reçues extrapolées (64) et les données opérationnelles détectées sensoriellement (64) de l'autre véhicule (60) et l'utilisation de la différence déterminée pour ajuster les données opérationnelles reçues extrapolées (64).

8. Procédé selon l'une quelconque des revendications 1 à 7, le calcul de la trajectoire (53, 53') comprenant la prise en compte de données de spécifications techniques (65) de l'autre véhicule (60), les données de spécifications techniques (65) étant transmises de l'autre véhicule (60) au véhicule (50) au moyen du réseau d'accès radio (30).

9. Procédé selon la revendication 8, le calcul de la trajectoire (53, 53') comprenant la prise en compte d'un fonctionnement imaginaire de l'autre véhicule (60) étant conformes aux données de spécifications techniques reçues.

10. Procédé selon la revendication 9, la prise en compte d'un fonctionnement imaginaire de l'autre véhicule (60) comprenant la prise en compte de la plus grande dangerosité d'une trajectoire (53, 53') de l'autre véhicule (60) pour le véhicule (50).

11. Procédé selon l'une quelconque des revendications 1 à 10, l'unité de commande (51) du véhicule (50) calculant la trajectoire (53, 53') en fonction des données opérationnelles (64) d'une pluralité d'autres véhicules (60).

12. Procédé selon l'une quelconque des revendications 1 à 11, la trajectoire (53, 53') étant calculée de sorte que le véhicule (50) maintienne une distance de sécurité confortable par rapport à l'autre véhicule (60) devant sur une voie (111) d'une route (110), de sorte que le véhicule (50) dépasse confortablement et sûrement, l'autre véhicule (60) s'approchant le véhicule (50) sur une voie adjacente (112) dans une direction opposée, ou de sorte que le véhicule (50) se déplace confortablement et sûrement vers une voie adjacente (112), l'autre véhicule (60) s'approchant du véhicule (50) sur la voie adjacente (112) de l'arrière.

13. Système comprenant un véhicule (50), le véhicule (50) comprenant une unité de communication sans fil (52) pour établir une connexion sans fil (20, 21) avec un réseau d'accès radio (30) et une unité de commande (51) étant connectée à l'unité de communication sans fil (52), et un centre de données en périphérie (33), le centre de données en périphérie (33) étant connecté au réseau d'accès radio (30), le système étant configuré pour réaliser un procédé selon l'une des revendications 1 à 12.

14. Produit de programme informatique comprenant un support de mémoire lisible par ordinateur stockant un code de programme, le code de programme étant exécutable par une unité de commande (51) d'un véhicule (50) et un centre de données en périphérie (33) étant connecté à un réseau d'accès radio (30) et amenant l'unité de commande (51) et/ou le serveur de centre de données en périphérie (33) à réaliser un procédé selon l'une des revendications 1 à 12 lorsqu'il est exécuté par un processeur de l'unité de commande et/ou le centre de données en périphérie (33), respectivement.
